# EUROPEAN PATENT APPLICATION

(11) **EP 2 938 060 A1**
(43) Date of publication of application: **28.10.2015**
(21) Application number: 12890917.3
(22) Date of filing: 24.12.2012
(51) Int. Cl.: H04N 5/225

(54) **DYNAMIC ADJUSTMENT DEVICE FOR RECORDING RESOLUTION AND DYNAMIC ADJUSTMENT METHOD AND TERMINAL**

(71) Applicant: Yulong Computer Telecommunication Scientific (Shenzhen) Co. Ltd., Shenzhen, Guangdong 518057 (CN); Dongguan Yulong Telecommunication Tech Co. Ltd., Guangdong 523808 (CN)
(72) Inventor: ZHANG, Yanyan, Shenzhen Guangdong 518057 (CN)
(74) Representative: Johnson, Richard Alan
(86) International application number: PCT/CN2012/087317
(87) International publication number: WO 2014/100946

(57) **Abstract**

The present disclosure provides a dynamic adjustment device for adjusting video resolution. The dynamic adjustment device includes an attributive character obtaining unit configured for obtaining attributive characters of captured video images, which are captured during video capturing; and a resolution adjustment unit configured for dynamically adjusting the video resolution of a current video according to the obtained attributive character. The present disclosure further provides a dynamic adjustment method and a terminal for adjusting video resolution. By means of the technical solution of the present disclosure, the video resolution can be dynamically adjusted according to an actual situation in a procedure of capturing a video, so as to not only ensure the quality of the captured video but also effectively save storage space without interrupting video capturing.

## Description

### FIELD OF THE INVENTION

The present invention relates to video capturing technology, and especially, to a dynamic adjustment device, a dynamic adjustment method, and a terminal for adjusting video resolution.

### BACKGROUND OF THE INVENTION

In related art, during capturing video by using a video capturing device, when a certain resolution is configured, the resolution of the video to be captured is fixed, and the resolution of the obtained video is also fixed. To adjust the resolution, the current video has to be interrupted, and a new video is restarted after the resolution is reset.

Based on the above technology, when users set a low resolution for capturing video, the configured code rate is low, the display area is small, and the display quality of the captured video is poor. A high resolution may be set for capturing video when the user find that the quality of the captured video is poor. At this time, the current video has to be interrupted, and a new video is restarted after the high resolution is set, which may result in the two captured videos are not consecutive, and it is inconveniently to save and/or watch the videos. Also, if the user sets a high resolution for capturing video, when the storage space is not enough or the camera is to be out of power, a low resolution may be set to capture video after a restart. Because the current video has to be interrupted for the configuration of the resolution and a new video is restarted, on this situation, a time interval is generated between the two videos, and capturing video without interruption can not be achieved, which may result in loss of some wonderful moments.

Therefore, a new dynamic adjustment technology for adjusting video resolution is needed, to dynamically adjust the video resolution according to an actual situation during capturing video, so as to not only ensure the quality of the captured videos but also save storage space, without interrupting video capturing.

### SUMMARY OF THE INVENTION

Based on the problems set forth above, the present disclosure provides a new dynamic adjustment technology for adjusting video resolution, thereby enabling to dynamically adjust the video resolution according to an actual situation during capturing video, so as to not only ensure the quality of the captured videos but also save storage space without interrupting video capturing.

The present disclosure provides a dynamic adjustment device for adjusting video resolution. The dynamic adjustment device include: an attributive character obtaining unit configured for obtaining attributive characters of captured images which are captured during video capturing, and a resolution adjustment unit configured for dynamically adjusting the video resolution of a current video according to the obtained attributive characters.

In the technical solution, by obtaining attributive characters of a captured video to identify the current state, so as to dynamically adjust the video resolution without interrupting video capturing, thus, to avoid loss of important images when the current video is interrupted and another video is restarted. Furthermore, video with low resolution has insufficient definition but has smaller video file, while video with high resolution has sufficient definition but takes up larger storage space, therefore, by dynamically adjusting the video resolution, the video definition and storage space occupied by video file can be effectively coordinated.

In the above technical solution, preferably, the attributive character obtaining unit includes a movement state obtaining sub-unit. The movement state obtaining sub-unit is configured for obtaining a movement degree of the captured object in the captured video, and the resolution adjustment unit adjusts the video resolution to a preset value corresponding to the obtained movement degree, wherein, the movement degree is proportional to the video resolution.

In this technical solution, when the movement degree of the captured object is slight, almost motionless, as for the captured video, the captured consecutive images are the same, and it is equivalent to capture still images, and high definition are unnecessarily, thus the video resolution is turned down to save storage space. When the movement degree of the captured object is great, the video resolution is heightened to make the video more clearer, so as to recognize the captured object easily.

In the above technical solution, preferably, the movement state obtaining sub-unit is configured for detecting the motion vector of the captured object in a plurality of captured consecutive images, and utilizes the detected motion vector value to indicate the movement degree.

In the technical solution, by detecting the motion vector of the captured object, to obtain the difference degree of various images of the captured video, so as to determine whether the video resolution is adjusted.

In the above-mentioned technical solution, preferably, the dynamic adjustment device further includes a relevance storage unit. The relevance storage unit is configured for storing at least one video scene and resolution corresponding thereto. The attributive character obtaining unit further includes a scene recognition sub-unit. The scene recognition sub-unit is configured for recognizing the current video scene according to the captured images, and the resolution adjustment unit adjusts the video resolution to a value which corresponds to the current video scene.

In the technical solution, a number of video resolutions can be preset to correspond to different video scenes, such as human photography, landscape, and macro-photography. Thus, when the video scene is identified, especially, when the video scene is switched to another, the video resolution can be adjusted automatically. In detail, taken the "human photography" scene and "landscape" scene for example, because the captured object in "human photography" scene tends to move, a higher definition are required. However, the captured object in "landscape" scene tends to be in a static state, thus, a low video resolution may be selected. When the "human photography" scene is detected to be switched to the "landscape" scene, the video resolution is turned down automatically. When the "landscape" scene is detected to be switched to the "human photography" scene, the video resolution is heightened automatically.

In the above technical solution, preferably, the dynamic adjustment device further includes a command receiving unit. The command receiving unit is configured for receiving commands of adjusting video. The resolution adjustment unit is further configured for adjusting the video resolution of the current video according to the commands.

In the technical solution, during capturing video, the users is further allowed to adjust the video resolution of the current video manually according to the actual situation, so as to satisfy individuation and requirement for real-time.

In the above technical solution, preferably, the dynamic adjustment device further includes a document processing unit. The document processing unit is configured for establishing video object layers in the captured video file, each video object layer corresponds to one kind of video resolution.

In this technical solution, as for the captured video file, the video segment corresponding to one kind of video resolution can be regarded as a related individual part, thus, a video file including a plurality of video resolutions can be regarded as one including a number of related individual parts. For each individual part, a video object layer (VOL) is established, to record information such as the video resolution of the corresponding individual part, whereby the decoder is enabled to decode the corresponding individual part according to the VOL.

The present disclosure further provides a dynamic adjustment method for adjusting video resolution. The dynamic adjustment method includes: step 302, obtaining attributive characters of captured images, which is captured during video capturing; and step 304, dynamically adjusting the video resolution of the current video according to the obtained attributive characters.

In the technical solution, by obtaining attributive characters of captured images to identify the current state, so as to dynamically adjust the video resolution without interrupting video capturing, thus, to avoid loss of important images when the current video is interrupted and another video is restarted. Furthermore, video with low resolution has insufficient definition but has smaller video file, while video with high resolution has sufficient definition but takes up more storage space, therefore, by dynamically adjusting the video resolution, the video definition and storage space occupied by video file can be effectively coordinated.

In the above technical solution, preferably, step 302 includes: obtaining a movement degree of the captured object in the captured video, and adjusting the video resolution to a preset value corresponding to the obtained movement degree, wherein, the movement degree is proportional to the video resolution.

In the technical solution, when the movement degree of the captured object is slight, almost motionless, as for the captured video, the captured consecutive images are the same, namely, it is equivalent to capture still images, and high definition are unnecessarily, thus the video resolution is allowed to be turned down to save storage space. When the movement degree of the captured object is great, the video resolution is heightened to make the video more clearer, so as to recognize the captured object easily.

In the above technical solution, preferably, the step of obtaining movement degree further includes: detecting the motion vector of the captured object in a plurality of captured consecutive images, and utilizes the detected motion vector value to indicate the movement degree.

In the technical solution, by detecting the motion vector of the captured object, to obtain the difference degree of various images of the captured video, so as to determine whether the video resolution is adjusted.

In the above technical solution, preferably, before step 302, the method further includes: storing at least one video scene and a resolution corresponding to each video scene. Accordingly, step 302 includes: identifying the current video scene according to the captured images, and step 304 includes: adjusting the video resolution to a value which corresponds to the current video scene.

In the technical solution, a number of video resolutions can be preset to correspond to different video scenes, such as human photography, landscape, and macro-photography. Thus, when the video scene is identified, especially, when the video scene is switched to another, the video resolution can be adjusted automatically. In detail, taken the "human photography" scene and "landscape" scene for example, because the captured object in "human photography" scene tends to move, a higher definition are required. However, the captured object in "landscape" scene tends to be in a static state, thus, a low video resolution may be selected. When the "human photography" scene is detected to be switched to the " landscape" scene, the video resolution is turned down automatically. When the "landscape" scene is detected to be switched to the "human photography" scene, the video resolution is heightened automatically.

In the above technical solution, preferably, the method further includes: receiving commands of adjusting video, and adjusting the video resolution of the current video according to the commands.

In the technical solution, during capturing video, the users is further allowed to adjust the video resolution of the current video manually according to the actual situation, so as to satisfy individuation and requirement for real-time.

In the above technical solution, preferably, step 304 further includes: establishing video object layers in the captured video file, each video object layer corresponds to one kind of video resolution.

In the technical solution, in the captured video file, the video segment corresponding to one kind of video resolution can be regarded as a related individual part, thus, a video file including a plurality of video resolutions can be regarded as one including a number of related individual parts. For each individual part, a video object layer (VOL) is established, to record information such as the video resolution of the corresponding individual part, whereby the decoder is enabled to decode the corresponding individual part according to the VOL.

The present disclosure further provides a terminal includes the dynamic adjustment device for adjusting video resolution described in any one of the above technical solutions.

In the technical solution, by obtaining attributive characters of captured images to identify the current state, so as to dynamically adjust the video resolution without interrupting video capturing, thus, to avoid loss of important images when the current video is interrupted and another video is restarted. Furthermore, video with low resolution has insufficient definition but has smaller video file, while video with high resolution has sufficient definition but takes up more storage space, therefore, by dynamically adjusting the video resolution, the video definition and storage space occupied by video file can be effectively coordinated.

As can be seen from the above technical solutions, the resolution can be dynamically adjusted according to an actual situation during capturing video, so as to not only ensure the quality of the captured video but also save storage space and power consumption without interrupting video capturing.

### BRIEF DESCRIPTION OF THE DRAWINGS

FIG. 1 is a block diagram of a dynamic adjustment device for adjusting video resolution in accordance with an embodiment of the present disclosure.
FIG. 2 is a block diagram of a terminal in accordance with an embodiment of the present disclosure.
FIG. 3 is a flow chart of a dynamic adjustment method for adjusting video resolution in accordance with an embodiment of the present disclosure.
FIG. 4 is a detailed flow chart of adjusting video resolution according to the movement state of the captured object in accordance with an embodiment of the present disclosure.
FIG. 5 is a detailed flow chart of adjusting video resolution according to video scenes in accordance with an embodiment of the present disclosure.
FIG. 6 is a detailed flow chart of adjusting video resolution according to the movement state of the captured object and video scenes in accordance with an embodiment of the present disclosure.

### DETAILED DESCRIPTION OF ILLUSTRATED EMBODIMENTS

To understand the above purposes, features and advantages of the present disclosure more clearly, the present disclosure will be further described in detail below in combination with the accompanying drawings and the specific implementations. It should be noted that, the embodiments of the present application and the features in the embodiments may be combined with one another without conflicts.

Many specific details will be described below for sufficiently understanding the present disclosure. However, the present disclosure may also be implemented by adopting other manners different from those described herein. Accordingly, the protection scope of the present invention is not limited by the specific embodiments disclosed below.

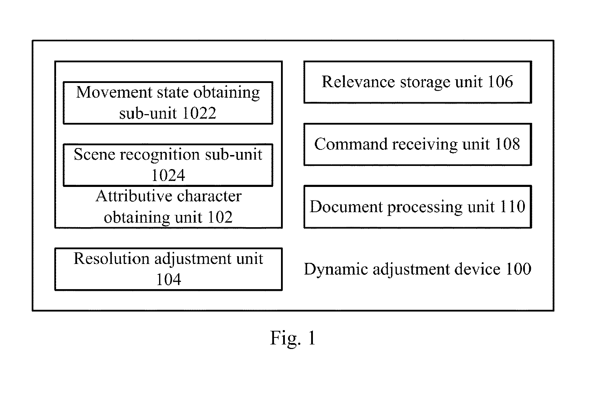

FIG. 1 is a block diagram of a dynamic adjustment device for adjusting video resolution in accordance with an embodiment of the present disclosure.

Referring to FIG. 1, the dynamic adjustment device 100 for adjusting video resolution in accordance with an embodiment of the present disclosure includes an attributive character obtaining unit 102 configured for obtaining attributive characters of captured images, which are captured during video capturing, and a resolution adjustment unit 104 configured for dynamically adjusting the video resolution of a current video according to the obtained attributive characters.

In the technical solution, by obtaining attributive characters of a captured video to identify the current state, so as to dynamically adjust the video resolution without interrupting video capturing, thus, to avoid loss of important images when the current video is interrupted and another video is restarted. Furthermore, video with low resolution has insufficient definition but has smaller video file, while video with high resolution has sufficient definition but takes up larger storage space, therefore, by dynamically adjusting the video resolution, the video definition and storage space occupied by video file can be effectively coordinated.

In the above technical solution, preferably, the attributive character obtaining unit 102 includes a movement state obtaining sub-unit 1022. The movement state obtaining sub-unit 1022 is configured for obtaining a movement degree of the captured object in the captured video, and the resolution adjustment unit 104 adjusts the video resolution to a preset value corresponding to the obtained movement degree, wherein, the movement degree in the embodiment is proportional to the video resolution.

In this technical solution, when the movement degree of the captured object is slight, almost motionless, as for the captured video, the captured consecutive images are the same, and it is equivalent to capture still images, and high definition are unnecessarily, thus the video resolution is turned down to save storage space. When the movement degree of the captured object is great, the video resolution is heightened to make the video more clearer, so as to recognize the captured object easily.

In the above technical solution, preferably, the movement state obtaining sub-unit 1022 is configured for detecting the motion vector of the captured object in a plurality of captured consecutive images, and uses the detected motion vector value to indicate the movement degree.

In the technical solution, by detecting the motion vector of the captured object, to obtain the difference degree of various images of the captured video, so as to determine whether the video resolution is adjusted.

In the above-mentioned technical solution, preferably, the dynamic adjustment device 100 further includes a relevance storage unit 106. The relevance storage unit 106 is configured for storing at least one video scene and resolution corresponding thereto. The attributive character obtaining unit 102 further includes a scene recognition sub-unit 1024. The scene recognition sub-unit 1024 is configured for identifying the current video scene according to the captured images, and the resolution adjustment unit 104 adjusts the video resolution to a value which corresponds to the current video scene.

In the technical solution, a number of video resolutions can be preset to correspond to different video scenes, such as human photography, landscape, and macro-photography. Thus, when the video scene is identified, especially, when the video scene is switched to another, the video resolution can be adjusted automatically. In detail, taken the "human photography" scene and "landscape" scene for example, because the captured object in "human photography" scene tends to move, a higher definition are required. However, the captured object in "landscape" scene tends to be in a static state, thus, a low video resolution may be selected. When the "human photography" scene is detected to be switched to the " landscape" scene, the video resolution is turned down automatically. When the "landscape" scene is detected to be switched to the "human photography" scene, the video resolution is heightened automatically.

In the above technical solution, preferably, the dynamic adjustment device 100 further includes a command receiving unit 108. The command receiving unit 108 is configured for receiving commands of adjusting video. The resolution adjustment unit 104 adjusts the video resolution of the current video according to the commands.

In this technical solution, during capturing video, the users is further allowed to adjust the video resolution of the current video manually according to the actual situation, so as to satisfy individuation and requirement for real-time.

In the above technical solution, preferably, the dynamic adjustment device 100 further includes a document processing unit 110. The document processing unit 110 is configured for establishing video object layers in the captured video file, each video object layer corresponds to one kind of video resolution.

In this technical solution, in the captured video file, the video segment corresponding to one kind of video resolution can be regarded as a related individual part, thus, a video file including a plurality of video resolutions can be regarded as one including a number of related individual parts. For each individual part, a video object layer (VOL) is established, to record information such as the video resolution of the corresponding individual part, whereby the decoder is enabled to decode the corresponding individual part according to the VOL. It is noteworthy that the said VOL is for MP4 video file. Obviously, when the captured video file is not MP4 format, another manner can be used to record to the video resolution of the video, so as to enable the decoder to decode the video file.

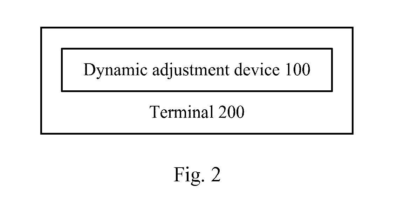

FIG. 2 shows a block diagram of a terminal in accordance with an embodiment of the present disclosure.

Referring to FIG. 2, the terminal 200 in the embodiment of the present disclosure includes the dynamic adjustment device 100 for adjusting video resolution in FIG. 1.

The terminal 200 obtains attributive characters of captured images to identify the current state, so as to dynamically adjust the video resolution without interrupting video capturing, thus, to avoid loss of important images when the current video is interrupted and another video is restarted. Furthermore, video with low resolution has insufficient definition but has smaller video file, while video with high resolution has sufficient definition but takes up more storage space, therefore, by dynamically adjusting the video resolution, the video definition and storage space occupied by video file can be effectively coordinated.

In detail, the said terminal may be any device having capturing module and processing module. When the capturing module captures video, the processing module dynamically adjusts the video resolution. The terminal 200 can be camera, video camera, mobile phone equipped with camera, tablet computer equipped with camera, personal computer equipped with camera, server linked to camera, and the like.

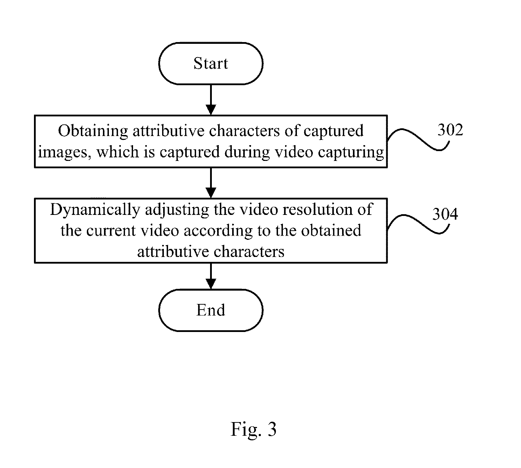

FIG. 3 is a flow chart of a dynamic adjustment method for adjusting video resolution in accordance with an embodiment of the present disclosure.

Referring to FIG. 3, the dynamic adjustment method for adjusting video resolution in accordance with an embodiment of the present disclosure includes: step 302, obtaining attributive characters of captured images, which is captured during video capturing; and step 304, dynamically adjusting the video resolution of the current video according to the obtained attributive characters.

In this technical solution, by obtaining attributive characters of captured images to identify the current state, so as to dynamically adjust the video resolution without interrupting video capturing, thus, to avoid loss of important images when the current video is interrupted and another video is restarted. Furthermore, video with low resolution has insufficient definition but has smaller video file, while video with high resolution has sufficient definition but takes up more storage space, therefore, by dynamically adjusting the video resolution, the video definition and storage space occupied by video file can be effectively coordinated.

In the above technical solution, preferably, the step 302 includes: obtaining a movement degree of the captured object in the captured video, and adjusting the video resolution to a preset value corresponding to the obtained movement degree, wherein, the movement degree is proportional to the video resolution.

In the technical solution, when the movement degree of the captured object is slight, almost motionless, as for the captured video, the captured consecutive images are the same, namely, it is equivalent to capture still images, and high definition are unnecessarily, thus the video resolution is allowed to be turned down to save storage space. When the movement degree of the captured object is great, the video resolution is heightened to make the video more clearer, so as to recognize the captured object easily.

In the above technical solution, preferably, the step of obtaining movement degree further includes: detecting the motion vector of the captured object in a plurality of captured consecutive images, and utilizes the detected motion vector value to indicate the movement degree.

In the technical solution, by detecting the motion vector of the captured object, to obtain the difference degree of various images of the captured video, so as to determine whether the video resolution is adjusted.

In the above technical solution, preferably, before step 302, the method further includes: storing at least one video scene and a resolution corresponding to each video scene. Accordingly, step 302 includes: identifying the current video scene according to the captured images, and step 304 includes: adjusting the video resolution to a value which corresponds to the current video scene.

In the technical solution, a number of video resolutions can be preset to correspond to different video scenes, such as human photography, landscape, and macro-photography. Thus, when the video scene is identified, especially, when the video scene is switched to another, the video resolution can be adjusted automatically. In detail, taken the "human photography" scene and "landscape" scene for example, because the captured object in "human photography" scene tends to move, a higher definition are required. However, the captured object in "landscape" scene tends to be in a static state, thus, a low video resolution may be selected. When the "human photography" scene is detected to be switched to the " landscape" scene, the video resolution is turned down automatically. When the "landscape" scene is detected to be switched to the "human photography" scene, the video resolution is heightened automatically.

In the above technical solution, preferably, the method further includes: receiving commands of adjusting video, and adjusting the video resolution of the current video according to the commands.

In the technical solution, during capturing video, the users is further allowed to adjust the video resolution of the current video manually according to the actual situation, so as to satisfy individuation and requirement for real-time.

In the above technical solution, preferably, step 304 further includes: establishing video object layers in the captured video file, each video object layer corresponds to one kind of video resolution.

In the technical solution, in the captured video file, the video segment corresponding to one kind of video resolution can be regarded as a related individual part, thus, a video file including a plurality of video resolutions can be regarded as one including a number of related individual parts. For each individual part, a video object layer (VOL) is established, to record information such as the video resolution of the corresponding individual part, whereby the decoder is enabled to decode the corresponding individual part according to the VOL. It is noteworthy that the said VOL is for MP4 video file. Obviously, when the captured video file is not MP4 format, another manner can be used to record the video resolutions of the video, so as to enable the decoder to decode the video file.

FIG. 3 is a flow chart of a dynamic adjustment method for adjusting video resolution in accordance with an embodiment of the present disclosure.

Referring to FIG. 3, the dynamic adjustment method for adjusting video resolution in accordance with an embodiment of the present disclosure includes: step 302, obtaining attributive characters of captured images, which is captured during video capturing; and step 304, dynamically adjusting the video resolution of the current video according to the obtained attributive characters.

In the technical solution, by obtaining attributive characters of captured images to identify the current state, so as to dynamically adjust the video resolution without interrupting video capturing, thus, to avoid loss of important images when the current video is interrupted and another video is restarted. Furthermore, video with low resolution has insufficient definition but has smaller video file, while video with high resolution has sufficient definition but takes up more storage space, therefore, by dynamically adjusting the video resolution, the video definition and storage space occupied by video file can be effectively coordinated.

In the above technical solution, preferably, step 302 includes: obtaining a movement degree of the captured object in the captured video, and adjusting the video resolution to a preset value corresponding to the obtained movement degree, wherein, the movement degree is proportional to the video resolution.

In the technical solution, when the movement degree of the captured object is slight, almost motionless, as for the captured video, the captured consecutive images are the same, namely, it is equivalent to capture still images, and high definition are unnecessarily, thus the video resolution is allowed to be turned down to save storage space. When the movement degree of the captured object is great, the video resolution is heightened to make the video more clearer, so as to recognize the captured object easily.

In the above technical solution, preferably, the step of obtaining movement degree further includes: detecting the motion vector of the captured object in a plurality of captured consecutive images, and utilizes the detected motion vector value to indicate the movement degree.

In the technical solution, by detecting the motion vector of the captured object, to obtain the difference degree of various images of the captured video, so as to determine whether the video resolution is adjusted.

In the above technical solution, preferably, before step 302, the method further includes: storing at least one video scene and a resolution corresponding to each video scene. Accordingly, step 302 includes: identifying the current video scene according to the captured images, and step 304 includes: adjusting the video resolution to a value which corresponds to the current video scene.

In the technical solution, a number of video resolutions can be preset to correspond to different video scenes, such as human photography, landscape, and macro-photography. Thus, when the video scene is identified, especially, when the video scene is switched to another, the video resolution can be adjusted automatically. In detail, taken the "human photography" scene and "landscape" scene for example, because the captured object in "human photography" scene tends to move, a higher definition are required. However, the captured object in "landscape" scene tends to be in a static state, thus, a low video resolution may be selected. When the "human photography" scene is detected to be switched to the " landscape" scene, the video resolution is turned down automatically. When the "landscape" scene is detected to be switched to the "human photography" scene, the video resolution is heightened automatically.

In the above technical solution, preferably, the method further includes: receiving commands of adjusting video, and adjusting the video resolution of the current video according to the commands.

In the technical solution, during capturing video, the users is further allowed to adjust the video resolution of the current video manually according to the actual situation, so as to satisfy individuation and requirement for real-time.

In the above technical solution, preferably, step 304 further includes: establishing video object layers in the captured video file, each video object layer corresponds to one kind of video resolution.

In the technical solution, in the captured video file, the video segment corresponding to one kind of video resolution can be regarded as a related individual part, thus, a video file including a plurality of video resolutions can be regarded as one including a number of related individual parts. For each individual part, a video object layer (VOL) is established, to record information such as the video resolution of the corresponding individual part, whereby the decoder is enabled to decode the corresponding individual part according to the VOL. It is noteworthy that the said VOL is for MP4 video file. Obviously, when the captured video file is not MP4 format, another manner can be used to record the video resolutions of the video, so as to enable the decoder to decode the video file.

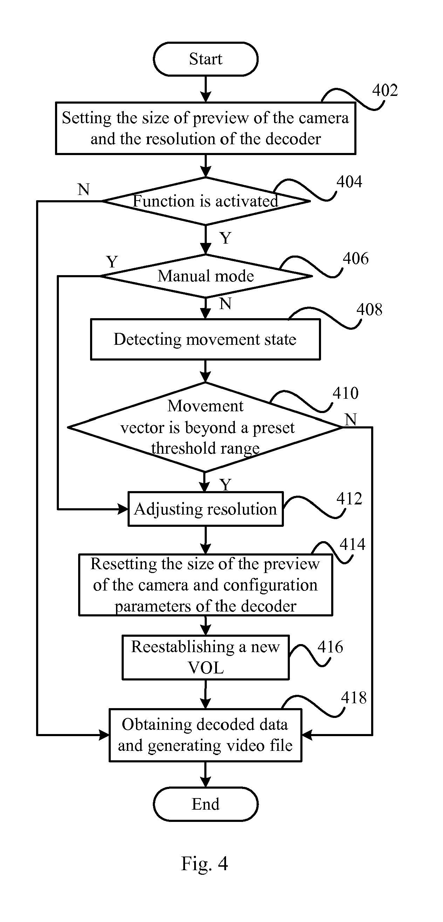

FIG. 4 is a detailed flow chart of adjusting video resolution according to movement states of the captured object in accordance with an embodiment of the present disclosure.

Referring to FIG. 4, in detail, procedures of adjusting video resolution according to movement states of the captured object in accordance with an embodiment of the present disclosure include:

Step 402, when video capturing begins, the size of preview of the camera and the resolution of the decoder are set according to the selected resolution or the preset default resolution.

Step 404, determining whether the function of dynamically adjusting video resolution is activated. If the function of dynamically adjusting video resolution is activated, the procedure goes to step 406. If the function of dynamically adjusting video resolution is not activated, the procedure goes to step 418, obtaining the decoded capturing data to generate corresponding video files.

Step 406, determining whether the function of dynamically adjusting video resolution is in a manual mode. If the function of dynamically adjusting video resolution is in the manual mode, the procedure goes to step 412, the current resolution can be switched manually to any supported resolution according to user' s requirements, for example, a high resolution may be set for capturing video when the user find that the quality of the captured video is poor, and the video resolution is turned down when the storage space is not enough or the camera is to be out of power or the captured object is not important, or the like. If the function of dynamically adjusting video resolution is not in the manual mode, the procedure goes to step 408.

Step 408, detecting movement states of the captured object to determine whether the movement of the captured object is vigorous. In detail, by detecting the motion vector of the captured object in a plurality of captured consecutive images, and utilizes the detected motion vector value to indicate the movement degree.

Step 410, determining whether the motion vector is beyond a preset threshold range. When the detected motion vector is less than the lower limit value of the preset threshold range, it means that the captured object is almost in a static state, at this time, the resolution is switched to a low resolution for capturing video, so as to save storage space and power. When the detected motion vector is greater than the upper limit value of the preset threshold range, it means that the captured object exercises vigorously, at this time, the resolution is switched to a high resolution, so as to capture a complex movement scene to get a clearer video. When the detected motion vector is within the preset threshold range, it means that the object is in a normal state, and the video resolution is not adjusted.

Step 412, dynamically adjusting the video resolution according to manual adjustment in the manual mode, or according to the detection result of movement state in an automatic state.

Step 414, resetting the size of the preview of the camera according to the adjusted video resolution, and further resetting the configuration parameters of the decoder.

Step 416, reestablishing a new VOL in the generated MP4 video file, thus, the decoder can utilize the VOL to achieve reconfiguration, so as to ensure the captured video can be decoded normally.

Step 418, obtaining decoded data and further writing the decoded date into the MP4 video file till the video capturing is stopped.

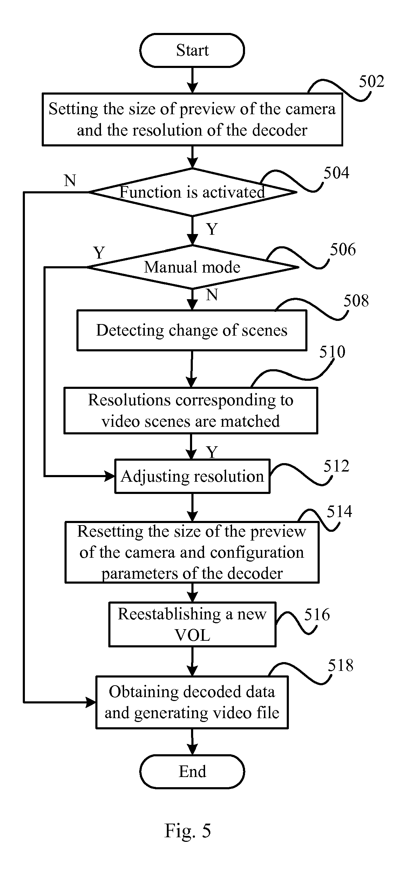

FIG. 5 is a detailed flow chart of adjusting video resolution according to video scenes in accordance with an embodiment of the present disclosure.

Referring to FIG. 5, in detail, adjusting video resolution according to video scenes in accordance with an embodiment of the present disclosure includes:

Step 502, when video capturing begins, the size of preview of the camera and the resolution of the decoder are set according to the selected resolution or the preset default resolution.

Step 504, determining whether the function of dynamically adjusting video resolution is activated. If the function of dynamically adjusting video resolution is activated, the procedure goes to step 506. If the function of dynamically adjusting video resolution is not activated, the procedure goes to step 518, obtaining the decoded capturing data to generate corresponding video files.

Step 506, determining whether the function of dynamically adjusting video resolution is in a manual mode. If the function of dynamically adjusting video resolution is in the manual mode, the procedure goes to step 512, the current resolution can be switched manually to any supported resolution according to user' s requirements, for example, a high resolution may be set for capturing video when the user find that the quality of the captured video is poor, and the video resolution is turned down when the storage space is not enough or the camera is to be out of power or the captured object is not important, or the like. If the function of dynamically adjusting video resolution is not in the manual mode, the procedure goes to step 508.

Step 508, detecting whether the video scene is changed. In detail, based on determination of whether the captured video has human face (by utilizing face recognition technology), the arrangement of the captured object, the distance between the captured object and the camera, the arrangement of light, the arrangement of the color, or the like, the current video scene is enabled to be recognized automatically.

Step 510, resolutions corresponding to video scenes are automatically matched when the video scene is changed. For example, a resolution of 1280*720 (namely 720p) is preset corresponding to "human photography" scene, and a resolution of 720*480 (namely 480p) is preset corresponding to "landscape" scene, thus, when captured object is switched from the "human photography" scene to the "landscape" scene, the resolution is changed from 720p to 480p automatically.

Step 512, dynamically adjusting the video resolution according to manual adjustment in the manual mode, or according to the detection result of video scenes in an automatic state.

Step 514, resetting the size of the preview of the camera according to the adjusted video resolution, and further resetting the configuration parameters of the decoder.

Step 516, reestablishing a new video object layer (VOL) in the generated MP4 video file, thus, the decoder can utilize the VOL to achieve reconfiguration, so as to ensure the captured video can be decoded normally.

Step 518, obtaining decoded data and further writing the decoded date into the MP4 video file till the video capturing is stopped.

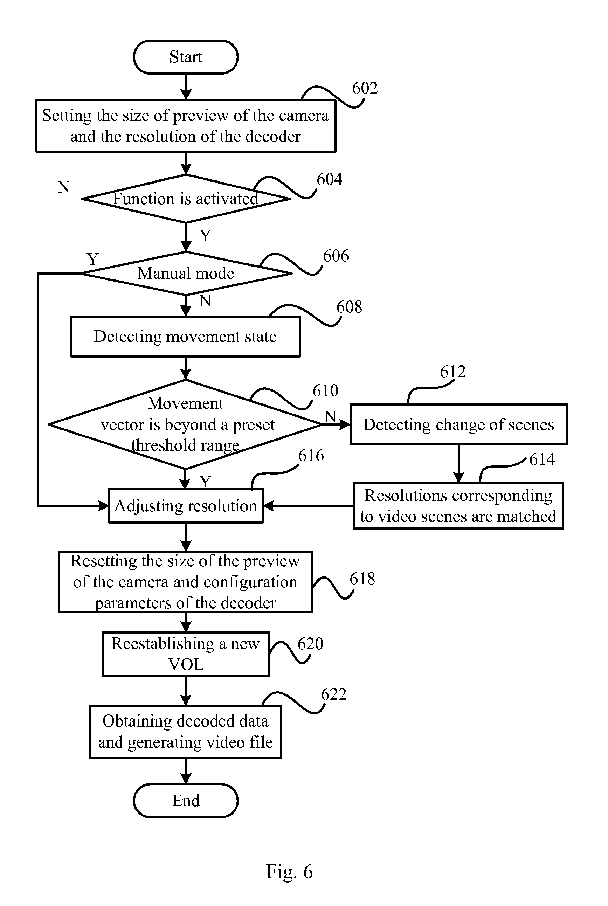

It is noted that, in above descriptions, FIGS. 4 and 5 are utilized to show the technical solutions of dynamically adjusting video resolution according to the movement state of the captured object and the video scene respectively, in fact, the above solutions can be combined to achieve the dynamic adjustment of video resolution, by recognizing the movement state of the captured object and the current video scene. A situation of dynamically adjusting video resolution based on the combination of a movement state of captured object and the video scene is shown in FIG. 6.

FIG. 6 is a detailed flow chart of adjusting video resolution according to movement states of the captured object and the video scene in accordance with an embodiment of the present disclosure.

Referring to FIG. 6, in detail, the procedures of adjusting video resolution according to movement states of the captured object and video scenes in accordance with an embodiment of the present disclosure include:

Step 602, when video capturing begins, the size of preview of the camera and the resolution of the decoder are set according to the selected resolution or the preset default resolution.

Step 604, determining whether the function of dynamically adjusting video resolution is activated. If the function of dynamically adjusting video resolution is activated, the procedure goes to step 606. If the function of dynamically adjusting video resolution is not activated, the procedure goes to step 622: obtaining the decoded capturing data to generate corresponding video files.

Step 606, determining whether the function of dynamically adjusting video resolution is in a manual mode. If the function of dynamically adjusting video resolution is in the manual mode, the procedure goes to step 616, the current resolution can be switched manually to any supported resolution according to user' s requirements, for example, a high resolution may be set for capturing video when the user find that the quality of the captured video is poor, and the video resolution is turned down when the storage space is not enough or the camera is to be out of power or the captured object is not important, or the like. If the function of dynamically adjusting video resolution is not in the manual mode, the procedure goes to step 608.

Step 608, detecting movement states of the captured object to determine whether the movement of the captured object is vigorous. In detail, by detecting the motion vector of the captured object in a plurality of captured consecutive images, and utilizes the detected motion vector value to indicate the movement degree.

Step 610, determining whether the motion vector is beyond a preset threshold range. When the detected motion vector is less than the lower limit value of the preset threshold range, it means that the captured object is almost in a static state, at this time, the resolution is switched to a low resolution for capturing video, so as to save storage space and power consumption. When the detected motion vector is greater than the upper limit value of the preset threshold range, it means that the captured object exercises vigorously, at this time, the resolution is switched to a high resolution, so as to capture a complex movement scene to get a clearer video. When the detected motion vector is within the preset threshold range, it means that the object is in a normal state, and the video resolution is not adjusted.

Step 612, detecting whether the video scene is changed. In detail, based on determination of whether the captured video has human face (by utilizing face recognition technology), the arrangement of the captured object, the distance between the captured object and the camera, the arrangement of light, the arrangement of the color, or the like, the current video scene can be recognized automatically.

Step 614, resolutions corresponding to video scenes are automatically matched when the video scene is changed. For example, a resolution of 1280*720 (namely 720p) is preset corresponding to "human photography" scene, and a resolution of 720*480 (namely 480p) is preset corresponding to "landscape" scene, thus, when the captured object is switched from the "human photography" scene to the "landscape" scene, the resolution is changed from 720p to 480p automatically.

Step 616, dynamically adjusting the video resolution according to manual adjustment in the manual mode, or according to the detection result of movement state in the automatic state, or according to the matching result of the video scene in the automatic mode.

Step 618, resetting the size of the preview of the camera according to the adjusted video resolution, and further resetting the configuration parameters of the decoder.

Step 620, reestablishing a new VOL in the generated MP4 video file, thus, the decoder can utilize the VOL to achieve reconfiguration, so as to ensure the captured video can be decoded normally.

Step 622, obtaining decoded data and further writing the decoded date into the MP4 video file till the video capturing is stopped.

The above specific implementations in combination with the accompanying drawings illustrates the technical solution of the present disclosure in detail. It is considered that the same resolution is used for capturing a section of video in related art, when the resolution is adjusted, the current video is interrupted, and a new video is restarted, which may result in loss of important images, and it cannot satisfy the requirement for the definition and the occupied storage space at the same time. Therefore, the present disclosure provides a dynamic adjustment device, a dynamic adjustment method, and a terminal for adjusting video resolution, to realize following advantages:
1. Different resolutions can be switched therebetween during capturing video, and the video is captured in different resolutions without interruption, so as to avoid loss of important images because of the operations of switching resolutions;
2. Videos with different resolutions are saved in the same video file, so as to be saved conveniently, and operations of "starting capturing" and "stopping capturing " for several times are omitted, and the work for switching, editing and composition of multiple videos is also omitted.
3. Providing a manual mode and an automatic mode, so as to satisfy users' requirements in various situations, and also allow to be adjusted randomly according to requirements.
4. In the manual mode, the resolution is allowed to be adjusted at any time according to changes of users' preference and concerns, so as to not only ensure the quality of important video segments but also balance the storage space and power consumption.
5. In the automatic mode, the resolution can be dynamically adjusted by detecting changes of the video scenes and/or the movement states, so as to not only realize optimum video quality but also save storage space and power consumption.

The foregoing descriptions are merely preferred embodiments of the present disclosure, rather than limiting the present disclosure. Various modifications and alterations may be made to the present disclosure for those skilled in the art. Any modification, equivalent substitution, improvement or the like made within the spirit and principle of the present disclosure shall fall into the protection scope of the present disclosure.

## Claims

1. A dynamic adjustment device for adjusting video resolution, comprising:
an attributive character obtaining unit, configured for obtaining attributive characters of captured images, which are captured during video capturing; and
a resolution adjustment unit, configured for dynamically adjusting the video resolution of a current video according to the obtained attributive characters.

2. The dynamic adjustment device for adjusting video resolution of claim 1, wherein the attributive character obtaining unit, comprises:
a movement state obtaining sub-unit, configured for obtaining a movement degree of the captured object in the captured video; wherein, the resolution adjustment unit adjusts the video resolution to a preset value corresponding to the obtained movement degree, wherein the movement degree is proportional to the video resolution.

3. The dynamic adjustment device for adjusting video resolution of claim 2, wherein the movement state obtaining sub-unit configured for detecting the motion vector of the captured object in a plurality of captured consecutive images, and utilizes the detected motion vector value to indicate the movement degree.

4. The dynamic adjustment device for adjusting video resolution of any one of claims 1-3, further comprising:
a relevance storage unit, configured for storing at least one video scene and a resolution corresponding thereto; and
the attributive character obtaining unit further comprising a scene recognition sub-unit, the scene recognition sub-unit configured for identifying the current video scene according to the captured images; and
the resolution adjustment unit further configured for adjusting the video resolution to a value which corresponds to the current video scene.

5. The dynamic adjustment device for adjusting video resolution of any one of claims 1-3, further comprising:
a command receiving unit, configured for receiving commands of adjusting video; and
the resolution adjustment unit further configured for adjusting the video resolution of the current video according to the command.

6. The dynamic adjustment device for adjusting video resolution of any one of claims 1-3, further comprising:
a document processing unit, configured for establishing video object layers in the captured video file, each video object layer corresponds to one kind of video resolution.

7. A dynamic adjustment method for adjusting video resolution, comprising:
step 302, obtaining attributive characters of captured images, which are captured during video capturing; and
step 304, dynamically adjusting the video resolution of a current video according to the obtained attributive characters.

8. The dynamic adjustment method for adjusting video resolution of claim 7, wherein step 302 further comprises:
obtaining a movement degree of the captured object in the captured video, and adjusting the video resolution to a preset value corresponding to the obtained movement degree, wherein the movement degree is proportional to the video resolution.

9. The dynamic adjustment method for adjusting video resolution of claim 8, wherein obtaining the movement degree comprises:
detecting the motion vector of the captured object in a plurality of captured consecutive images, and utilizing the detected motion vector value to indicate the movement degree.

10. The dynamic adjustment method for adjusting video resolution of any one of claims 7-9, wherein before step 302, the method further comprises: storing at least one video scene and a resolution corresponding thereto, and step 302 comprises:
identifying the current video scene according to the captured images; and
step 304 comprising:
adjusting the video resolution to a value which corresponds to the current video scene.

11. The he dynamic adjustment method for adjusting video resolution of any one of claims 7-9, further comprising:
receiving commands of adjusting video, and adjusting the video resolution of the current video according to the command.

12. The dynamic adjustment method for adjusting video resolution of any one of claims 7-9, step 304 further comprising:
establishing video object layers in the captured video file, each video object layer corresponds to one kind of video resolution.

13. A terminal, comprising a dynamic adjustment device for adjusting video resolution of any one of claims 1-6.
